Europäisches Patentamt

European Patent Office

Office européen des brevets

(19)

(11) Publication number: **0 345 391**
**A1**

(12) **EUROPEAN PATENT APPLICATION**

(21) Application number: **88305211.0**

(22) Date of filing: **08.06.88**

(51) Int. Cl.⁴: **H01Q 3/26 , G02F 1/21 , G02B 6/34**

The title of the invention has been amended (Guidelines for Examination in the EPO, A-III, 7.3).

(43) Date of publication of application:
**13.12.89 Bulletin 89/50**

(84) Designated Contracting States:
**AT BE CH DE ES FR GR IT LI LU NL SE**

(71) Applicant: **THE GENERAL ELECTRIC COMPANY, p.l.c.**
**1 Stanhope Gate**
**London W1A 1EH(GB)**

(72) Inventor: **Parsons, Nicholas John**
**15 Chelmer Terrace**
**The Downs Maldon Essex(GB)**

(74) Representative: **Tolfree, Roger Keith**
**GEC p.l.c. Central Patent Department**
**Chelmsford Office Marconi Research Centre**
**West Hanningfield Road**
**Great Baddow Chelmsford Essex CM2 8HN(GB)**

(54) **Method and apparatus for controlling the phase of an amplitude-modulated optical signal and its use in a phased-array antenna.**

(57) Apparatus for controlling the phase of an amplitude-modulation signal carried by light, for example a frequency control signal for operating one module of a phased-array radar antenna, comprises: an electro-optic TE-TM converter (12) for splitting the amplitude-modulated, plane-polarised light (at 10) into orthogonally-plane-polarised portions in a controlled amplitude ratio; a birefringent waveguide (13) for introducing a relative delay between the two portions equal to a quarter-cycle of the amplitude modulation period; and a light detector (14) for producing a signal which is a vector combination of the signals carried by the two portions, phase-shifted in accordance with the said amplitude ratio.

FIG.2a.

## Delaying an Amplitude-modulated Optical Signal

This invention relates to a method and apparatus for controlling the phase of an amplitude-modulation signal carried by an optical wave. The invention has particular application in phased-array radar antenna, in which it is proposed to use optical fibres and integrated optic circuits for the distribution of frequency reference and control signals to and from the array face. In such an antenna, a control signal at radio frequency may be carried as amplitude modulation of an optical wave, which is required to arrive at successive modules of the antenna at successively different phases.

According to a first aspect, the invention provides a method of controlling the phase of an amplitude-modulated input signal carried by a polarised optical wave comprising splitting the optical wave into two or more differently-polarised portions, and introducing between those portions a relative delay corresponding to a shift in the phase of the amplitude-modulated signal, the amplitude ratio between the said portions or the length of the delay, or both, being selected such that recombination of the differently-polarised portions yields an output signal carrying an amplitude-modulated signal of a desired phase shift relative to that of the input signal.

This use of the phenomenon of polarisation, whereby differently-polarised portions may be made to travel at different speeds, enables the amplitude-modulation signal carried by the optical wave to be delayed by a predetermined phase angle. This enables the delay to be controlled entirely by optical elements.

The method preferably includes the step of recombining the differently-polarised portions, advantageously by converting them both or all into an electrical signal carrying the said amplitude-modulated signal. However, the recombination of the signals may be achieved by first converting each differently-polarised portion independently to a corresponding electrical signal and then summing electrical signals.

In a preferred form of the invention the number of the said portions is two, plane-polarised in orthogonal planes, and the said delay is constant, the amplitude ratio of the splitting of the optical wave being controlled such that the vector summation of the said differently-polarised portions yields the ouput signal carrying an amplitude-modulated signal of the desired phase shift.

According to a second aspect, the invention provides apparatus for controlling the phase of an amplitude-modulated input signal carried by a polarised optical wave, comprising means for splitting the optical wave into two or more differently-polarised portions, means for introducing between those portions a relative delay corresponding to a shift in the phase of the amplitude- modulated signal, and means for selecting the amplitude ratio provided by the splitting means between the said portions, or the length of the delay provided by the delay-introducing means, or both, such that recombination of the differently-polarised portions yields an ouput signal carrying an amplitude-modulated signal of a desired phase shift relative to that of the input signal.

Preferably, the apparatus further comprises means for recombining the said differently-polarised portions to produce the output signal.

Preferably, the recombining means comprises detection means for converting both or all of the differently-polarised portions into an electrical ouput signal carrying the said amplitude-modulated signal with the desired phase shift.

Preferably, the splitting means comprises an electro-optic converter which produces two portions having orthogonal planes of polarisation, the two portions being in an amplitude ratio which is controllable by an electrical signal applied to the electro-optic converter.

The most convenient means for introducing a relative delay between two portions having orthogonal planes of polarisation comprises a birefringent medium through which the two portions travel, the length of the birefringent medium preferably being such as to introduce a relative delay between the portions of substantially one quarter of the period of amplitude modulation of the input signal.

According to a third aspect, the invention provides drive means for a phased-array antenna comprising: for each module of the antenna, an independent apparatus in accordance with the second aspect of the invention as described above, and means for recombining the differently-polarised portions to produce an electrical drive signal at the desired phase; and means for supplying the amplitude-modulated input wave to all the splitting means.

The invention also provides a phased-array antenna incorporating the invention in one or more of the aspects described above.

In order that the invention may be better understood, preferred embodiments of the invention will now be described, by way of example only, with reference to the accompanying diagrammatic drawings, in which;

Figure 1a is a schematic diagram of the process underlying the present invention;

Figure 1b is a vector diagram of the process of Figure 1a, indicating control by attenuation;

Figure 1c is a vector diagram of the process of Figure 1a, indicating control by splitting;

Figure 2a illustrates one way in which the process of Figure 1c is implemented by polarisation control;

Figure 2b is an integrated optic implementation of the apparatus of Figure 2a;

Figure 3a is an extension of the apparatus of Figure 2a to allow the desired phase shift to be any angle from 0° to 360°; and

Figure 3b is an integrated optic implementation of the apparatus of Figure 3a.

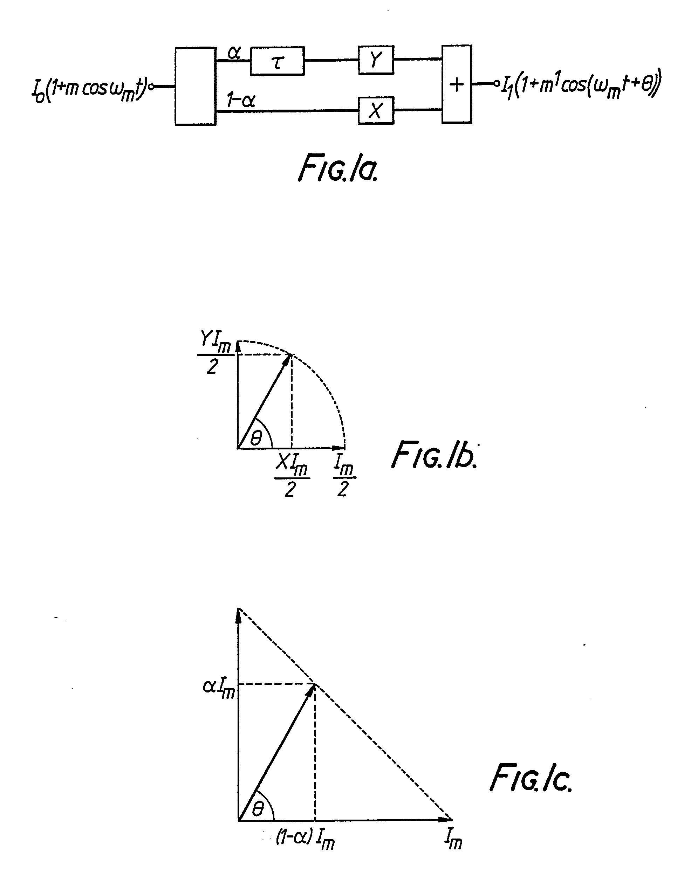

With reference first to Figures 1a to 1c, the signal carried by an amplitude-modulated optical input wave is given by:

$I = I_o(1 + m \cos w_m t)$

where $I_o$ is the mean optical intensity, m is the modulation depth, and $w_m$ is the angular frequency of modulation, which for radar purposes will be at radio frequency. In the example shown, this input signal is split into two portions in the ratio

$$\frac{\alpha}{(1 - \alpha)},$$

and one portion is delayed by a time which is ideally equal to one quarter of a cycle of the amplitude-modulation, to generate a quadrature component. The two portions also pass through respective attenuators X and Y and are then summed to produce an output signal equal to:

$I_1 (1 + m^1 \cos (w_m t + \theta))$

Thus summation of the two portions yields an output signal shifted in phase through an angle $\theta$ which is determined by the values of $\alpha$, X and Y.

Figure 1b illustrates one way of varying the relative amplitudes of the two components: by setting $\alpha = 0.5$, and $X^2 + Y^2 = 1$, then $X = \cos \theta$ and the output vector has a constant amplitude for all angles $\theta$.

In the theoretical model of Figure 1b, the output signal has an amplitude half that of the input signal, which in terms of detected power would represent an intrinsic loss of 6dB through the network. This may be avoided by adopting the model of Figure 1c, in which $X = Y = 1$ and in which the ratio $\alpha$ is varied. Here, the output vector no longer has a constant amplitude, but the intrinsic loss is lower, varying between 0 and 3 dB, being a maximum loss at 45°.

The preferred method of implementing the vector summation of Figure 1c is to divide the input signal into two portions which are plane-polarised in orthogonal directions, each portion being at an amplitude set by the ratio $\alpha$. Because these polarisations are orthogonal, no interference effects due to coherence of the optical wave occur.

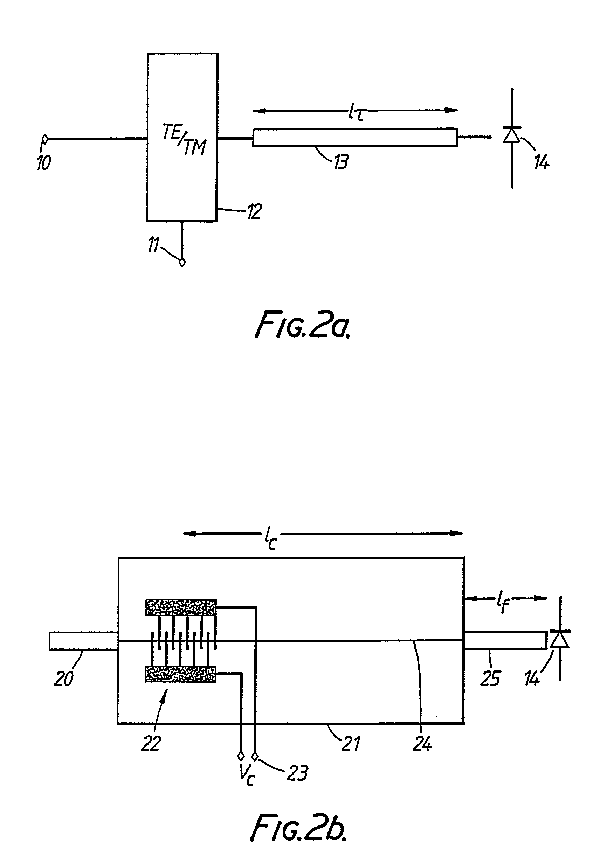

A preferred apparatus for producing and then summing orthogonal polarisations is shown in Figure 2a. The input optical signal I is plane-polarised in the TE mode and is applied at the terminal 10, and conveyed to an electro-optic TE-TM converter 12, controlled by means of an electrical control signal applied at terminal 11. The electro-optic converter 12 is connected to a birefringent medium 13 of effective length $1_T$ which in turn supplies light to a detector 14 for converting the optical signal into an electrical signal with the same amplitude modulation. The output from the electro-optic converter 12 consists of two distinct plane-polarised portions in a ratio of $\alpha$ to $(1 - \alpha)$ which is determined by the electrical input at the terminal 11. Both these portions travel through the birefringent medium 13, which is of such a length as to impart a relative delay between the two portions of substantially one quarter of a cycle $(2\pi /W_t)$ of the amplitude modulation. These two portions then emerge from the birefringent medium and are combined at the detector 14, which effectively produces a vector summation as shown in Figure 1c. The effect of the apparatus of Figure 2a is thus to impart a phase change of $\theta$ to the input signal which is carried as an amplitude modulation of the polarised optical wave, the angle $\theta$ being determined by the voltage applied at the terminal 11.

The apparatus of Figure 2a may be implemented partly by means of an integrated optic device, as shown in Figure 2b. The input polarised optical wave, which for example will be RF-modulated and TE-polarised, is collected by an optical fibre 20 which interfaces with a straight, titanium-diffused waveguide 24 on an X-cut, Y-propagating lithium niobate integrated optic device 21. (The optical fibre 20 could itself plane-polarise unpolarised light modulated at RF). An integrated optic TE-TM converter 22, controlled by an electrical signal $V_c$ at terminals 23, which may be of the type described in Alferness R.C. "Efficient TE-TM Conversion with low Drive Voltage", Opt. Lett., 5,473 (1980), then fulfils the function of the corresponding converter 12 of Figure 2a. The resultant optical wave passes along the remaining length $1_c$ of the integrated optic device 21, and thence through an optical fibre 25 of length $1_f$ which has birefringent properties. The differential delay between the two differently-polarised components is provided partly by the length $1_c$ of the integrated optic device 21, which may be of lithium niobate, and partly by the optical fibre 25.

If the RF frequency is sufficiently high, then the differential delay may be wholly provided by the length 1c of the device 21. The optical fibre 25 can then be a conventional isotropic type of arbitrary length.

The apparatus of Figures 2a and 2b is capable of providing a phase shift of between 0° and 90°. In order to provide phase control over the full 360° cycle of the amplitude-modulation signal, apparatus as shown in Figure 3a may be used.

With reference to Figure 3a, a portion of the input optical wave I is supplied at terminal 32 to a first TE-TM converter 30, and another portion of the input optical wave is shifted in phase by half a cycle of the input signal and is applied at terminal 33 to a second TE-TM converter 31. The first and second TE-TM converters 30, 31 are controlled respectively by voltage signals $V_1$ and $\overline{V}_1$ which are complementary such that when one produces TE-polarised light the other produces TM-polarised light. The outputs from the TE-TM converters 30, 31 are then combined using a polarisation-independent directional coupler 34 controlled by a voltage signal $V_2$. Proportions of the four components of the signal, the proportions controlled by the voltage $V_2$, are then supplied through identical birefringent materials 35, 36 of length $1_T$ to respective conjugate detectors 37, 38. The output at detector 37 may be in any of the four quadrants of phase defined by the angle $\theta$, depending on the values of $V_1$, $\overline{V}_1$ and $V_2$. Clearly, the signal provided by the TE-TM converter 30 represents a vector in the first quadrant ($\theta$ between 0° and 90°), while the signal from the TE-TM converter 31 represents a vector in the third quadrant ($\theta$ from 180° to 270°); the variable power splitter 34 mixes selectable proportions of these vectors to produce a combined vector in any of the four quadrants. In this particular example, the arrangement is such that the outputs to the detectors 37 and 38 always represent vectors rotating in opposite directions, so as to provide phase conjugate outputs from those detectors. Such outputs are particularly useful in linear phased arrays, where conjugate phase shifts are required by element pairs spaced equally about the array centre.

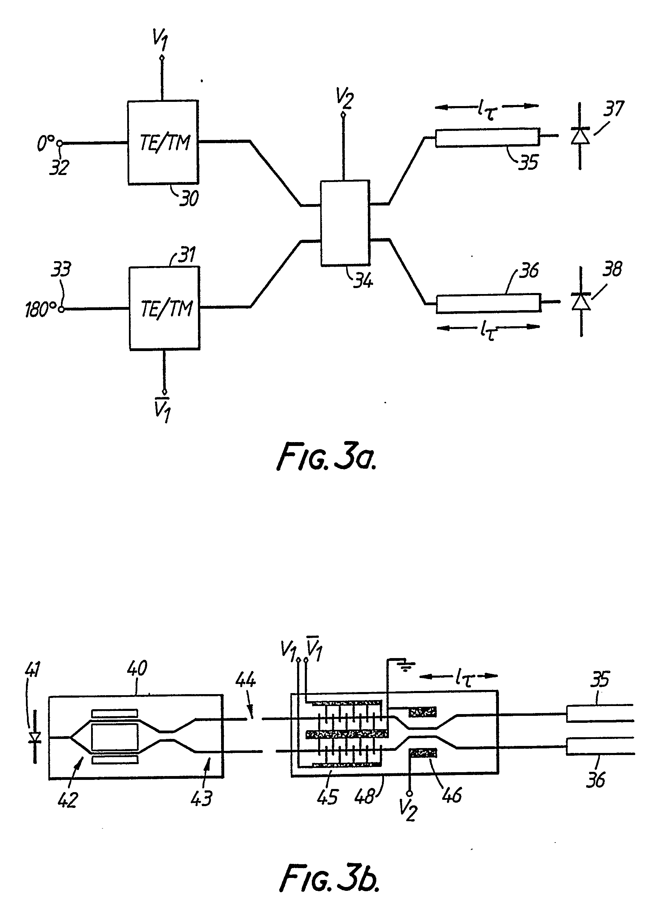

The implementation of the apparatus of Figure 3a with integrated optic devices is shown in Figure 3b, which also illustrates the source and the means of modulation of the light. A light source 41, for example a light-emitting diode, provides a plane-polarised optical wave to a first integrated optic device 40 comprising a travelling wave modulator 42 having complementary outputs 43, i.e. outputs of which the amplitude modulation is in antiphase. These complementary outputs are connected as inputs to one or more integrated optic devices 48, of which only one is illustrated. Where more than one device 48 is required the coupling is effected by power splitters 44 (not shown). Each integrated device 48 comprises a TE-TM converter 45 of the type described above with reference to Figure 2b, driven by the complementary voltages $V_1$ and $\overline{V}_1$, in series with a polarisation-independent coupler 46 driven by a voltage $V_2$, acting as the variable power splitter 34 of Figure 3a. The remaining length $1_T$ of the integrated optic device 48 imparts a differential delay which enhances the differential delay provided by birefringent media or birefringent optical fibres 35, 36 which in turn supply light to the corresponding conjugate detectors 37, 38 (not shown in Figure 3b).

As described above, the whole of the differential delay may be provided by the device 48 when the RF frequency is sufficiently high.

The apparatus of Figures 3a and 3b is particularly well adapted to use in phased-array radar antenna. In such arrays, the element or module spacing is typically only half a wavelength of the RF frequency, which severely restricts the backplane area available for connection to each module. For this reason, it has been proposed to use optical fibres to distribute frequency reference and control signals from a central control to and from the array face. With reference to Figure 3b, the phased array, of which each module would have its own detector, would be served by several identical integrated optic devices 48, one for each pair of conjugate detectors 35, 36. These integrated optic devices 48 would receive their amplitude-modulated polarised optical wave by way of the power splitter 44 from a common source 40 to 43.

## Claims

1. A method of controlling the phase of an amplitude-modulated input signal carried by a polarised optical wave, comprising splitting the optical wave into two or more differently-polarised portions ($\alpha$, 1 - $\alpha$), and introducing between those portions a relative delay ($\zeta$) corresponding to a shift in the phase of the amplitude-modulated signal, the amplitude ratio between the said portions or the length of the delay, or both, being selected such that recombination of the differently-polarised portions yields an output signal carrying an amplitude-modulated signal of a desired phase shift relative to that of the input signal.

2. A method according to claim 1, further including the step of recombining both or all the differently-polarised portions to produce the said output signal.

3. A method according to claim 2, wherein the recombining step comprises converting both or all the differently-polarised portions into an electrical signal carrying the said amplitude-modulated signal.

4. A method according to claim 2, wherein the recombining step comprises converting each of the said differently-polarised portions into a corresponding electrical amplitude-modulated signal and recombining the two electrical signals thus produced.

5. A method according to any preceding claim, wherein the number of the said portions is two, plane-polarised in orthogonal planes, and the said delay is constant, the amplitude ratio of the splitting of the optical wave being controlled such that vector summation of the said differently-polarised portions yields the output signal carrying an amplitude-modulated signal of the desired phase shift.

6. Apparatus for controlling the phase of an amplitude-modulated input signal carried by a polarised optical wave, comprising means (12,22) for splitting the optical wave into two or more differently-polarised portions, means (13,21,25) for introducing between those portions a relative delay corresponding to a shift in the phase of the amplitude-modulated signal, and means for selecting the amplitude ratio provided by the splitting means between the said portions, or the length of the delay provided by the delay-introducing means, or both, such that re-combination of the differently-polarised portions yields an output signal carrying an amplitude-modulated signal of a desired phase shift relative to that of the input signal.

7. Apparatus according to claim 6, further comprising means (14) for recombining the said differently-polarised portions to produce the output signal.

8. Apparatus according to claim 7, wherein the recombining means comprises detection means for converting both or all of the differently-polarised portions into an electrical output signal carrying the said amplitude-modulated signal with the desired phase shift.

9. Apparatus according to claim 6, 7 or 8, wherein the splitting means comprises an electro-optic converter (12) which produces two portions having orthogonal planes of polarisation, the two portions being in an amplitude ratio which is controllable by an electrical signal applied to the electro-optic converter.

10. Apparatus according to claim 9, wherein the means for introducing a relative delay comprises a birefringent medium (13) through which the two portions travel.

11. Apparatus according to claim 10, wherein the birefringent medium has a length such as to introduce a relative delay between the portions of substantially one quarter of the period of amplitude modulation of the input signal.

12. Apparatus according to claim 10 or 11, wherein the birefringent medium comprises an optical fibre (25) or a portion of an integrated optical device (21).

13. Apparatus according to claim 10, 11 or 12 wherein the birefringent medium comprises a lithium niobate crystal.

14. Apparatus according to claim 6, 7 or 8, comprising means for dividing the optical wave into two intermediate input waves whose amplitude modulations are in anti-phase with each other, splitting means comprising two independently controllable electro-optic converters (30,31) each connected to receive a respective intermediate input wave and to produce two orthogonally-plane-polarised portions in an amplitude ratio which is controllable by an electrical signal applied to the electro-optic converter, and means (34) for coupling the four portions to produce a coupled output wave which is passed through the means for introducing the relative delay, such that the said phase shift is selectable between 0 degrees and 360 degrees by appropriate control of the two amplitude ratios and of the means for coupling the four portions.

15. Drive means for a phased array antenna having phase-conjugate pairs of modules, comprising, for each said pair of modules, an independent apparatus in accordance with claim 14, in which the coupling means produces two phase-conjugate output waves each of which is passed through the means for introducing the relative delay and is coupled to its respective module of the said pair of modules.

16. Drive means for a phased-array antenna comprising: for each module of the antenna, an independent apparatus in accordance with claim 6, and means for recombining the differently-polarised portions to produce an electrical drive signal at the desired phase; and means for supplying the amplitude-modulated input wave to all the splitting means.

17. Drive means according to claim 15, comprising, for each module, means for recombining the differently- polarised portions to produce an electrical drive signal at the desired phase; and means for supplying the amplitude-modulated input wave to all the splitting means.

18. Drive means according to claim 15 or claim 17, wherein each recombining means comprises a detector arranged to receive both or all the differently-polarised portions to produce the said electrical drive signal.

19. Drive means according to any of claims 15 to 18, comprising a source of polarised light, and means for amplitude-modulating the polarised light to produce the amplitude-modulated input wave.

20. A phased array antenna driven by drive means in accordance with any of claims 15 to 19.

21. A phased-array radar antenna driven by drive means according to any of claims 15 to 19, wherein the amplitude-modulation is at radio frequency.

Fig.1a.

Fig.1b.

Fig.1c.

**FIG.2a.**

**FIG.2b.**

FIG. 3a.

FIG. 3b.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| X | US-A-4 341 442 (JOHNSON) * Abstract; column 6, line 32 - column 7, line 41; figure 4 * | 1,6 | H 01 Q 3/26 G 02 F 1/21 G 02 B 6/34 |
| Y | | 15-21 | |
| X | LASER UND OPTOELECTRONIK, vol. 16, no. 1, February 1984, pages 17-30, Stuttgart, DE; R. KIST et al.: "Fiber and integrated optical monomode sensors: a review" * Pages 20,21, section 3; figures 9,10 * | 1,6 | |
| Y | Idem | 15-21 | |
| Y | GB-A-2 174 505 (STC) * Abstract; page 1, lines 58,67; page 2, lines 83,104; figures 1,2 * | 15-21 | |
| A | GB-A-2 181 857 (STC) * Abstract; page 1, lines 5,48; figures * | 1,6,15-21 | TECHNICAL FIELDS SEARCHED (Int. Cl.4) |
| A | US-A-4 739 334 (SOREF) * Abstract; figures 3,4 * | 1,6,15-21 | H 01 Q G 02 F G 02 B H 04 B |
| A | EP-A-0 257 964 (INTERNATIONAL STANDARD ELECTRIC) * Abstract; figures 1-6 * | 15-21 | |

The present search report has been drawn up for all claims

| Place of search | Date of completion of the search | Examiner |
|---|---|---|
| THE HAGUE | 19-01-1989 | ANGRABEIT F.F.K. |